# EUROPEAN PATENT APPLICATION

(11) **EP 2 719 868 A2**
(43) Date of publication of application: **16.04.2014**
(21) Application number: 13183067.1
(22) Date of filing: 05.09.2013
(51) Int. Cl.: F01D 9/06

(54) **A duct assembly**

(30) Priority: 10.10.2012 GB 201218151
(71) Applicant: Rolls-Royce plc, London SW1E 6AT (GB)
(72) Inventor: Cooper, Joseph, Bristol, South Gloucestershire BS32 8DS (GB)
(74) Representative: Yeomans, Victoria Jane Anora

(57) **Abstract**

A duct (100) for a gas turbine engine system (not shown) is used to convey exhaust gas and bypass air away from the engine system, towards an exhaust nozzle (28). The duct (100) comprises an inlet face (120) having at least two inlet portions (122) and defines the outer extremity of a path (104) for the gas and/or air through the duct (100). The duct (100) comprises a plurality of flat panel members (140) which together define the outer extremity of the path (104).

## Description

### Field of the Invention

The present invention relates to a gas transfer duct and particularly, but not exclusively, to a gas transfer duct for use with a gas turbine engine system.

### Background to the Invention

In aerospace applications, a gas transfer duct may be used with a gas turbine engine system to convey exhaust gas and bypass air away from the engine's turbines, toward an exhaust nozzle.

The gas transfer duct may be required to provide a transition between the outlet from the turbines, each of which is typically circular, and an exhaust nozzle of a different shape, such as a rectangular exhaust nozzle. The shape of the exhaust nozzle may be dictated by other requirements, such as other constraints on the shape or size of the airframe.

### Statements of Invention

According to an aspect of the present invention there is provided a duct for a gas turbine engine system through which, in use, exhaust gas and bypass air are conveyed away from the engine toward an exhaust nozzle, the duct comprising a plurality of flat panel members which together define the outer extremity of a path for the gas and/or air through the duct, the duct having an inlet face comprising at least two inlet portions, wherein a plurality of primary flat panel members extend downstream from the at least two inlet portions, the inlet face being smaller than the cross-section defined by the primary panel members; and a plurality of guide panels being located around a periphery of the inlet face, each guide panel being a flat panel member and the guide panels being oriented so as to widen the path in a direction extending from the inlet face and through the duct.

This provides the advantage that the overall shape of the duct is and its constituent parts are simple and cost effective to manufacture. Complex shapes are not required, which is expected to reduce the cost and time associated with the manufacturing of the duct.

Optionally, each of the plurality of primary flat panel members has a respective downstream edge, the downstream edges together defining a substantially polygonal duct outlet.

An advantage of a polygonal duct outlet is that it can be more easily integrated into an aircraft structure than a circular outlet.

In addition, the fabrication of an exhaust nozzle that connects to a polygonal duct outlet will be simpler and more cost effective than for other shaped duct outlets.

Optionally, the duct comprises four primary flat panel members, each of the primary flat panel members having a respective downstream edge, the downstream edges together defining a substantially rectilinear duct outlet.

In other embodiments of the invention, the duct may comprise more than four primary flat panel members, which flat panel members may be constructed to define a duct outlet having more than four edges.

Optionally, the plurality of primary flat panel members together define a substantially polygonal cross-section, perpendicular to the streamwise flow direction, during use.

An advantage of forming the duct with a polygonal cross-section is that the duct is easier and cheaper to manufacture than a duct having a circular or a curved cross-sectional profile. Optionally, the duct comprises four primary flat panel members that together define a substantially rectilinear cross-section, perpendicular to the streamwise flow direction, during use.

In general, aircraft gas turbine engines are installed such that the gas flow through the engine is substantially parallel to the fore-aft axis of the airframe. Consequently, the engine exhaust gas and/or bypass air will generally be discharged in a direction substantially parallel to the fore-aft axis of the airframe.

By providing the duct with a substantially rectilinear cross-sectional profile perpendicular to the streamwise flow direction of the gas and/or air, the duct may be more conveniently integrated into the airframe.

Optionally, the guide panels are oriented to be oblique to the primary flat panel members.

The guide panels serve to prevent flow separation occurring between the exhaust gas and/or bypass air flows and the inner surfaces of the duct. By preventing flow separation and the concomitant flow losses, the efficiency of the flow through the duct may be maximised.

Optionally, the duct further comprises at least one guide vane positioned between any two neighboring inlet portions.

The guide vanes allow the gas and/or air entering each of the two or more inlet portions to be smoothly directed along the axis of the duct and towards the duct outlet.

Optionally, the at least one guide vane is positioned to entrain together the gas and/or air passing through any two neighboring inlet portions.

The guide vanes are shaped to encourage the entrainment of the gas and/or air flows passing through any two neighboring inlet portions.

The guide vanes are shaped to encourage the entrainment of adjacent gas and/or air flow streams without the flows separating from the inner surfaces of the duct.

Optionally, the at least one guide vane is shaped to follow at least part of the outline of the duct inlet face.

In other embodiments of the invention, the guide vanes may be arranged at a variable separation from the outline of the duct inlet face.

Optionally, the duct comprises a liner defining an inner path for exhaust gases within an outer path for bypass air.

The liner serves to keep exhaust gases separate from bypass air as each flows through the duct. Since the bypass air will be at a lower temperature than the exhaust gas, the bypass air can be used to cool the liner and duct.

Other aspects of the invention provide devices, methods and systems which include and/or implement some or all of the actions described herein. The illustrative aspects of the invention are designed to solve one or more of the problems herein described and/or one or more other problems not discussed.

### Brief Description of the Drawings

Examples of the present invention will now be described in more detail, by way of example only, and with reference to the accompanying drawings, in which:
Fig. 1 is a schematic axial section of a gas turbine engine, indicating an example of the present invention;
Figs. 2 is a schematic perspective view of the outlet face of a duct according to the present invention;
Figure 3 is a schematic perspective view of the inlet face of the duct of Figure 2;
Fig. 4 is a schematic longitudinal section of the duct of Figures 2 and 3;
Fig. 5 is a schematic view on the outlet of the duct of Figures 2 to 4; and
Fig. 6 is a schematic view of the panels used to form the duct of Figures 2 to 5, prior to assembly of the duct.

It is noted that the drawings may not be to scale. The drawings are intended to depict only typical aspects of the invention, and therefore should not be considered as limiting the scope of the invention. In the drawings, like numbering represents like elements between the drawings.

### Detailed Description

The figures illustrate a duct 100 for a gas turbine engine system (not shown) through which, in use, exhaust gas and/or bypass air are conveyed away from the engine system toward an exhaust nozzle 28. The duct 100 defines the outer extremity of the path 104 for the gas and/or air through the duct 100. The duct 100 comprises a plurality of flat panel members 140 that together define the outer extremity of the path 104.

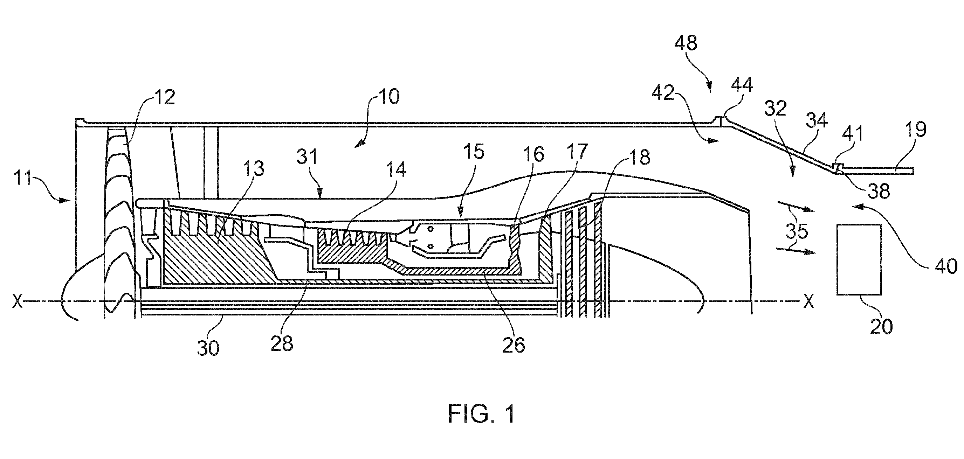

Referring to Figure 1, a gas turbine engine is generally indicated at 10 and comprises, in axial flow series, an air intake 12, a propulsive fan 14, an intermediate pressure compressor 16, a high pressure compressor 18, a combustor 20, a turbine arrangement comprising a high pressure turbine 22, an intermediate pressure turbine 24 and a low pressure turbine 26, and an exhaust nozzle 28.

The gas turbine engine 10 operates in a conventional manner so that air entering the intake 12 is accelerated by the fan 14 which produces two air flows: a first air flow into the intermediate pressure compressor 16 and a second air flow which provides propulsive thrust. The intermediate pressure compressor 16 compresses the air flow directed into it before delivering that air to the high pressure compressor 18 where further compression takes place.

The compressed air exhausted from the high pressure compressor 18 is directed into the combustor 20 where it is mixed with fuel and the mixture combusted. The resultant hot combustion products then expand through, and thereby drive, the high, intermediate and low pressure turbines 22,24,26. The high, intermediate and low pressure turbines 22,24,26 respectively drive the high and intermediate pressure compressors 18,16 and the fan 14 by suitable interconnecting shafts 36,38,40.

Exhaust combustion gases which leave the low pressure turbine 26, and bypass air passing around the engine core 42 are directed through a transition region 46 by a duct 100 before being exhausted through the nozzle 28 to provide propulsive thrust. A liner (not shown in Figure 1) may be provided within part of the duct 100, to prevent mixing of the bypass air and the exhaust gases. A reheater or afterburner 30 may be provided before the exhaust nozzle 28, indicated schematically in Figure 1.

The gas turbine engine system may comprise a single gas turbine engine in which a core exhaust flow is separated from a bypass air flow so as to produce at least two exhaust and/or gas flow streams exiting the engine system.

Alternatively, the engine system may comprise two or more gas turbine engines, each engine producing either a core exhaust flow only or a bypass flow in addition to the core exhaust flow, thus resulting in at least two exhaust and/or gas flow streams exiting the engine system.

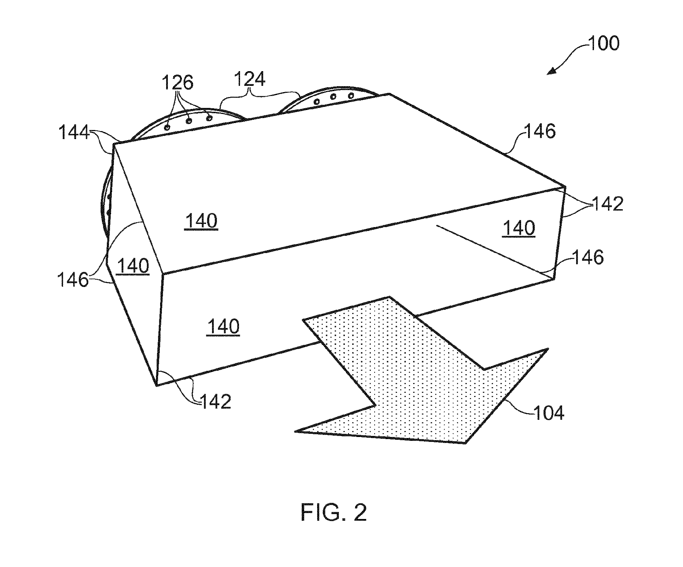

A duct 100 according to the present invention is shown in Figure 2. The duct 100, in use, conveys exhaust gas and bypass air away from the engine towards an exhaust nozzle 28. In order to do this, the duct 100 defines the outer extremity of a path 104 for gas and/or air through the duct 100. This path 104 is shown schematically in Figure 2.

The duct 100 comprises a plurality of flat panel members 140 that together define the outer extremity of the path 104. Each of the flat panel members 140 is in the form of a flat sheet or flat plate. In other words, each flat panel member 140 is a planar member.

In this embodiment, the duct 100 comprises twelve primary flat panel members 140, each of which has a downstream edge 142. The downstream edges 142 together define a rectangular outlet 130 for the duct 100. In other embodiments of the invention, other outlet shapes could be provided. Other shapes could include other rectilinear shapes, such as a square outlet.

If a different number of primary flat panel members 140 are used, other polygonal duct outlet shapes can be provided, such as triangles, hexagons etc. The flat, planar nature of the panel members 140 results in each edge 38 being straight and hence, the outlet 130 will have a rectilinear or polygonal shape, according to the number of panel members 140 that are used.

The flat, planar nature of the panel members 140 also results in the duct 100 having a substantially polygonal cross-section, perpendicular to the streamwise flow direction 104. The cross-section will generally have the same shape as the outlet 130, but may be larger or smaller in size, according to the angle at which the panel members 140 are set relative to each other, i.e. whether they are rectilinear or whether they flare towards or away from the outlet 130.

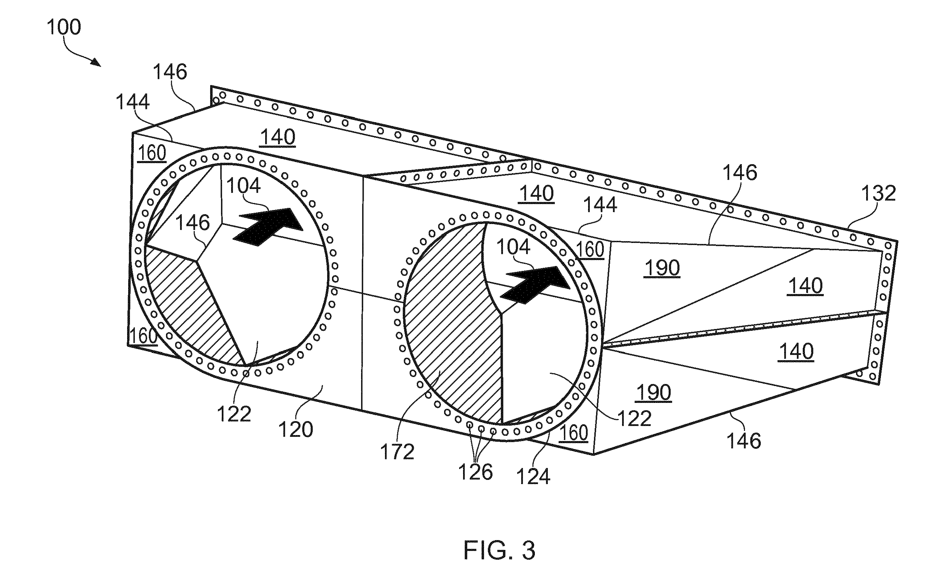

The outlet 130 carries a flange 132 (see Figure 3) which allows for the mounting of the duct outlet 130 to the exhaust nozzle 28 or to other arrangements, such as the afterburner 30.

The duct 100 has an inlet face 120, generally opposite to the outlet 130. The inlet face 120 is defined by at least two inlet portions 122 in the form of flange rings 124 containing bolt holes 126 by which the duct 100 can be mounted to the engine system, as shown, for example, in Figure 1. The exit from the low pressure turbine 26 is typically circular in form, hence the use of circular flange rings 124. The flange rings 124 are secured to the upstream edges 144 of the panel members 140, so that the flange rings 124 protrude slightly beyond the panel members 140 for fixing the duct 100 in position in an airframe.

Gaps between the flange rings 124 and the upstream edges 144 of the panel members 140, particularly in the corners of the inlet face 120, are filled by small filler plates 160, made of flat, sheet material.

Other shapes of turbine exit can be accommodated and it will be readily understood how the flange rings 124 could be replaced with an alternative arrangement to secure the duct 100 to turbine exits of various rectilinear, polygonal and non-polygonal shapes, and of various sizes.

It can be seen from the figures that the flange rings 124 are narrower than the cross-section defined by the panel members 140. This applies along at least one axis (in this example, along the axis which is illustrated as the horizontal axis in Figure 1).

The duct 100 therefore forms a box with flat, or planar, sides serving to convey gas and/or air from the inlet face 120 to the outlet 130 and in so doing, to provide a transition between the circular inlet portions 122 and the outlet 130, which is angular in this example.

It is desirable to maintain a smooth flow of gas and/or air through the duct 100. In particular it is desirable to ensure that the gas and/or air entering each of the inlet portions 122 is smoothly entrained within the duct 100. This entrainment may be encouraged by the provision of an exhaust guide vane 170.

The exhaust guide vane 170 is formed from curved sheets or panels that are shaped, primarily by an appropriate choice of curvature, to follow at least part of the outline of the inlet portions 122.

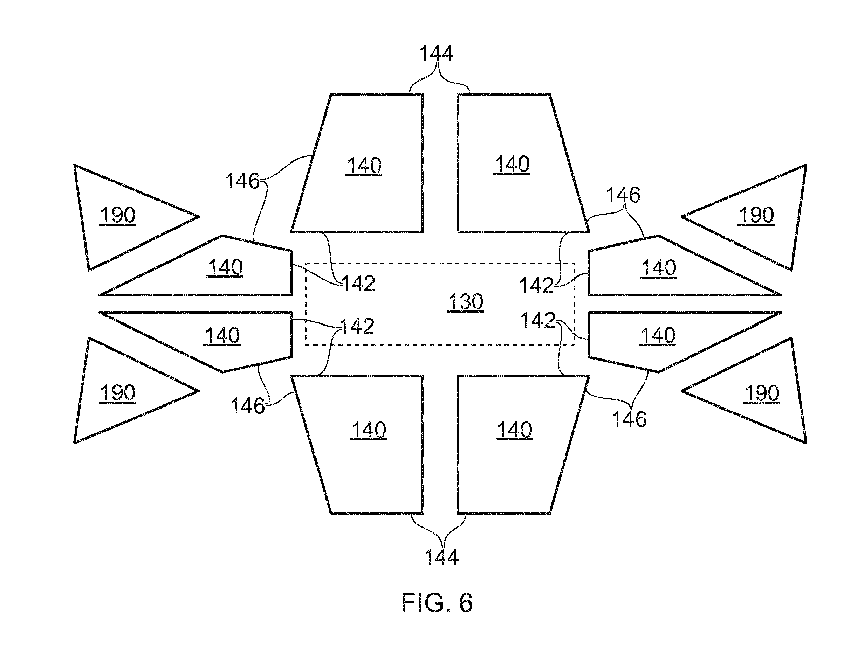

The exhaust guide vane 170 can be seen in Figure 6 following the circular shape of the inlet portions 122. The exhaust guide vane 170 flares outwardly (as viewed along the duct 100, through the inlet face 120) in order to entrain the gas and/or air from adjacent flow streams.

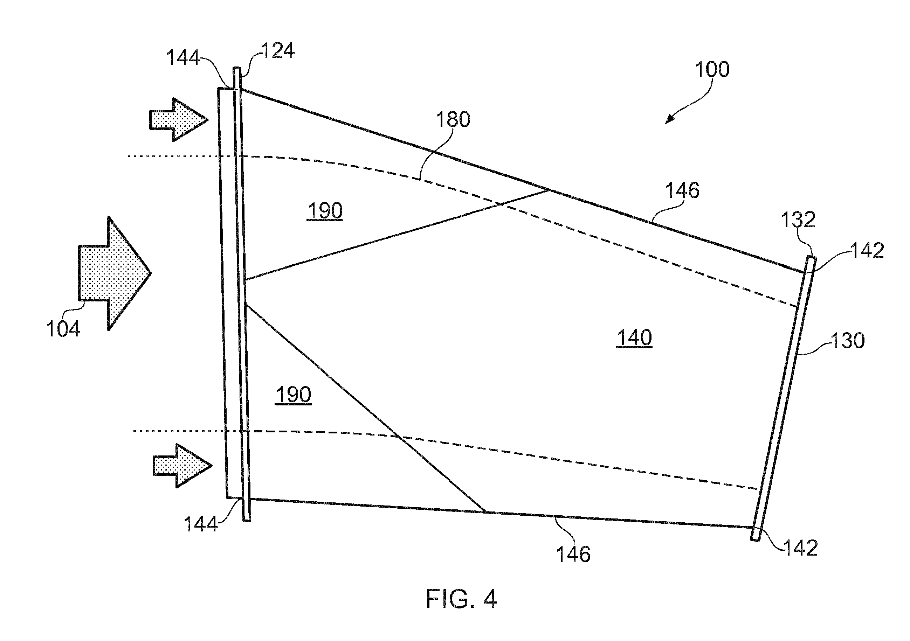

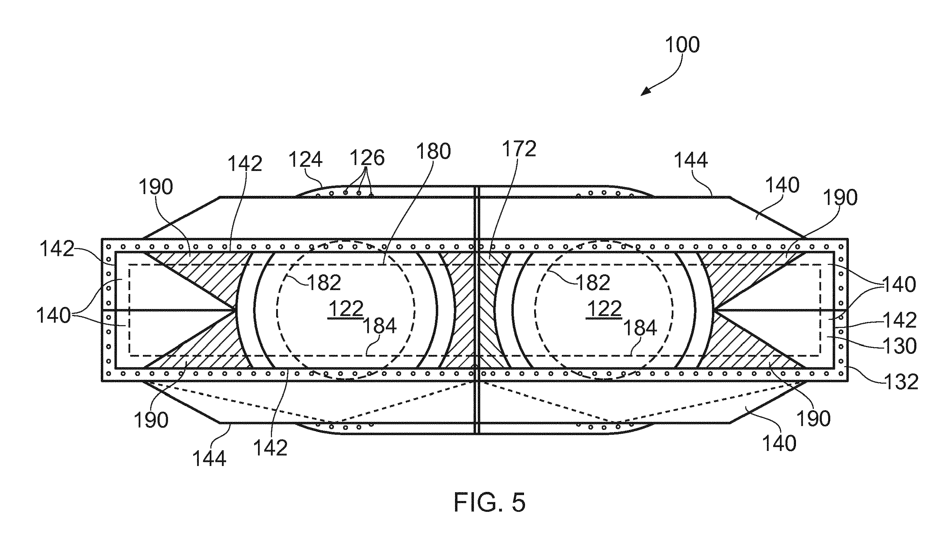

A liner 180 may be provided within the duct 100 to keep exhaust combustion gases separate from bypass air while both are flowing through the duct 100. Figure 5 indicates the position of a first liner edge 182 at the inlet face 122 by a broken circle, and a second liner edge 184 at the outlet 130 by a broken rectangle. Broken lines indicate the liner position in Fig. 4. It is intended that a liner 180 will usually be employed, so that there will be an inner path for exhaust gases, within an outer path for bypass air. The bypass air will provide cooling for the liner 180.

In the embodiment shown, the duct 100 defines the outer extremity of the path 104 of bypass air passing through the duct 100. In the following description therefore, it is to be understood that the fluid flowing past the surfaces provided by the duct 100 will be bypass air. However, in other embodiments of the invention the fluid may be exhaust combustion gases or a mixture of exhaust combustion gases and bypass air.

In the present embodiment, bypass air entering the inlet face 120 encounters a step change in the cross-section of the flow path 35, from the circular cross section of the inlet portions 122, to the rectangular cross section of the duct 100. This may result in disruption to the flow may also cause separation of the flow from the duct surfaces.

Guide panels 190 that are located around the periphery of the inlet face 120 encourage smooth flow within the duct 100 and downstream of the inlet face 120. Each guide panel 190 is a flat panel member in the form of a flat sheet or flat plate; in other words, a planar member. The guide panels 190 are oriented to widen the bypass air path, along the path 104, with the guide panels 190 widening the path 104 from the inlet face 120 towards the outer extremity defined by the primary flat panel members 140. The guide panels 190 are generally triangular in shape and are oriented to be oblique to the primary flat panel members 140. In other words, the guide panels 190 are not parallel with any of the primary flat panel members 140.

The relative positions and orientations of the inlet face 120 and the outlet 130, the sizes of the inlet portions 122 and the outlet 130, and consequently the degree of widening of the duct 100 may all be modified by changing the shape of the primary flat panel members 140, as indicated by Figure 6. Figure 6 shows a duct 100 according to the invention, prior to assembly. Each of the primary panel members 140 has a downstream edge 142, as discussed above, which downstream edges 142 can be brought together to form the outlet 130, indicated in broken lines in Figure 6. Front-to-back edges 146 of the panel members 140 lead from the downstream edges 142 to the corresponding upstream edges 144 at the inlet face 120 of the assembled duct 100. The front-to-back edges 146 of neighbouring panel members 140 are attached one another during the manufacture of the duct 100 by means of welding, bolted flanges, mechanical joints, pins or any other suitable fastening technique.

If the shape of the panel members 140 is changed by changing the angles between the various edges 142,144,146, the resultant assembled duct 100 can be modified in shape, as discussed above. In particular, the degree of widening (or flare angle) can be changed, and the degree of redirection provided by the transition duct 100.

It is expected that separation of the flow from the interior surfaces of the duct 100 is likely to occur if the outer perimeter of the duct 100 widens at a flare angle that is greater than about 15 degrees. Consequently, the degree of flare provided by the primary flat panel members 140, and the reduced flares provided by the guide panels 190 will maintain the overall flare angle below approximately15 degrees as bypass air flows along the extremities of duct 100.

The guide panels 190 may be simple triangular shapes, as shown in Figure 6. Furthermore, the shape and size of the guide panels 190 enables modification of the effect of the guide panels 190 in smoothing the flow of bypass air immediately downstream of the inlet face 120.

Although embodiments of the present invention have been described above with reference to specific examples, it should be appreciated that modifications to the examples can be made without departing from the scope of the invention as claimed. For example, many different shapes, sizes and relative shapes and sizes can be chosen for the components, particularly in response to external constraints imposed by engine design or airframe design.

Features described above with reference to the invention may be used in combinations other than the combinations explicitly described. Although functions have been described with reference to certain features, those functions may be performable by other features whether described or not. Although features have been described with reference to certain embodiments, those features may also be present in other embodiments, whether described or not.

## Claims

1. A duct (100) for a gas turbine engine system through which, in use, exhaust gas and/or bypass air are conveyed away from the engine system towards an exhaust nozzle (28),
the duct (100) comprising a plurality of flat panel members (140) which together define the outer extremity of a path (104) for the gas and/or air through the duct (100),
the duct (100) having an inlet face (120) comprising at least two inlet portions (122),
wherein a plurality of primary flat panel members (140) extend downstream from the at least two inlet portions (122),
the inlet face (120) being smaller than the cross-section defined by the primary panel members (140); and
a plurality of guide panels (190) being located around a periphery of the inlet face (120), each guide panel (190) being a flat panel member and the guide panels (190) being oriented so as to widen the path (104) in a direction extending from the inlet face (120) and through the duct (100).

2. The duct (100) as claimed in Claim 1, wherein each of the plurality of primary flat panel members (140) has a respective downstream edge (142), the downstream edges (142) together defining a substantially polygonal duct outlet (130).

3. The duct (100) as claimed in Claim 2, wherein the duct (100) comprises four primary flat panel members (140), each of the primary flat panel members (140) having a respective downstream edge (142), the downstream edges (142) together defining a substantially rectilinear duct outlet (130).

4. The duct (100) as claimed in any one of the preceding claims, wherein the plurality of primary flat panel members (140) together define a substantially polygonal cross-section, perpendicular to the streamwise flow direction, during use.

5. The duct (100) as claimed in Claim 4, comprising four primary flat panel members (140) that together define a substantially rectilinear cross-section, perpendicular to the streamwise flow direction, during use.

6. The duct (100) as claimed in any one of the preceding claims, wherein the guide panels (190) are oriented to be oblique to the primary flat panel members (140).

7. The duct (100) as claimed in any one of the preceding claims, further comprising at least one guide vane (170) positioned between any two neighboring inlet portions (122).

8. The duct (100) as claimed in Claim 7, wherein the at least one guide vane (170) is positioned to entrain together the gas and/or air flowing through any two neighboring inlet portions (122).

9. The duct (100) as claimed in Claim 7 or Claim 8, wherein the at least one guide vane (170) is shaped to follow at least part of the outline of the duct inlet face (120).

10. The duct (100) as claimed in any preceding claim, further comprising a liner (180) defining an inner path for exhaust gases within an outer path for bypass air.
